# EUROPÄISCHE PATENTSCHRIFT

(11) **EP 1 048 340 B1**
(45) Veröffentlichungstag und Bekanntmachung des Hinweises auf die Patenterteilung: **23.08.2006**
(21) Anmeldenummer: 00107701.5
(22) Anmeldetag: 10.04.2000
(51) Int. Cl.: B01D 53/94, B01D 53/86, B01D 53/90, F01N 3/20, B01D 53/56

(54) **Verfahren zum Einbringen eines Reduktionsmittels eines Stickoxids in ein Gasgemisch und Vorrichtung zum Durchführen des Verfahrens**
Process for introducing a reducing agent for a nitrogen oxide into a gas mixture and apparatus for performing the process
Procédé pour l'introduction d'un agent de réduction pour un oxyde d'azote dans un melange gazeux et dispositif pour la mise en oeuvre du procédé

(30) Priorität: 30.04.1999 DE 19919926
(43) Veröffentlichungstag der Anmeldung: 02.11.2000
(73) Patentinhaber: Argillon GmbH, 96257 Redwitz (DE)
(72) Erfinder: Preu, Gabriele, 81667 München (DE); Oechsner, Mattias, 81677 München (DE)
(74) Vertreter: Tergau & Pohl Patentanwälte

(56) Entgegenhaltungen:
- EP-A- 0 615 777
- WO-A-99/29432
- US-A- 4 466 760
- US-A- 4 756 890
- US-A- 5 809 775
- "Enzyklopädie Naturwissenschaft und Technik" 1979, VERLAG MODERNE INDUSTRIE , MÜNCHEN. SEITEN 905-906 Seiten 905-906 Seiten 905-906 * Seite 905 - Seite 906 *

## Beschreibung

Die Erfindung betrifft ein Verfahren zum Einbringen mindestens eines festen Ausgangsmaterials mindestens eines Reduktionsmittels eines Stickoxids in ein Gasgemisch. Ein derartiges Verfahren geht aus EP 0 615 777 A1 hervor. Neben dem Verfahren wird eine Vorrichtung zum Durchführen des Verfahrens angegeben.

Bei einer Verbrennung eines fossilen Energieträgers in Anwesenheit von Luft entsteht als ein unerwünschtes Nebenprodukt Stickoxid. Im Hinblick auf eine Umweltverträglichkeit der Verbrennung ist es wünschenswert, eine Bildung dieses Stickoxids zu unterbinden bzw. das Stickoxid nachträglich aus einem Abgas der Verbrennung zu entfernen. Die nachträgliche Entfernung des Stickoxids geschieht beispielsweise dadurch, daß dem Abgas ein Reduktionsmittel für das Stickoxid beigemengt wird. Bei dem aus EP 0 615 777 A1 bekannten Verfahren wird beispielsweise pulverförmiger Harnstoff mit Hilfe eines Präzisionsdosiergerätes in das Abgas eindosiert. Dabei wird in einem relativ komplizierten Verfahren mit Hilfe einer Preßluft und einer Zerstäuberdüse zunächst ein transportfähiges Feststoff/Luft-Gemisch (Aerosol) gebildet. Dieses Aerosol wird dem Abgas zugeführt. Auf einer Oberfläche eines Hydrolysekatalysators für Harnstoff wird (in Gegenwart von Wasser des Abgases) aus dem Harnstoff in einer Hydrolyse Ammoniak gebildet. Das gebildete Ammoniak fungiert als Reduktionsmittel des Stickoxids. Mit Hilfe eines zweiten Katalysators wird Ammoniak und Stickoxid zu molekularem Stickstoff und Kohlendioxid umgesetzt.

Aufgabe der vorliegenden Erfindung ist es, ein Verfahren und eine Vorrichtung anzugeben, bei denen ein festes Ausgangsmaterial eines Reduktionsmittels von Stickoxiden definiert und auf einfache Weise einem Gasgemisch zugeführt werden kann.

Zur Lösung der Aufgabe wird ein Verfahren zum Einbringen mindestens eines festen Ausgangsmaterials mindestens eines gasförmigen Reduktionsmittels eines Stickoxids in ein Gasgemisch angegeben, das in einem Hohlkörper in einer Strömungsrichtung bewegt wird, dadurch gekennzeichnet, daß durch die Bewegung des Gasgemisches im Hohlkörper das Ausgangsmaterial in das Gasgemisch angesaugt wird. Durch die Bewegung (Strömung) im Hohlkörper wird das Ansaugen bewirkt.

Das Gasgemisch ist beispielsweise das Abgas einer Verbrennungsmaschine, insbesondere eines Diesel- oder Ottomotors. Das Gasgemisch kann auch das Abgas eines fossil befeuerten Kraftwerks sein. Bei der Verbrennung kann sowohl ein fossiler Energieträger (z.B. Erdgas) als auch ein nichtfossiler Energieträger (z.B. Wasserstoff) oxidiert werden.

Das Reduktionsmittel ist insbesondere gasförmig. Beispielsweise wird Ammoniak als Reduktionsmittel und dazu Harnstof als Ausgangsmaterial von Ammoniak verwendet.

Insbesondere wird dabei als Hohlkörper ein Drehkörper verwendet. Der Drehkörper, beispielsweise ein zylindrischer Hohlkörper, weist eine Vorzugsrichtung für die Strömung des Gasgemisches auf. Der Hohlkörper ist beispielsweise ein Auspuffrohr eines Personenkraftwagens oder ein Kamin eines Kraftwerks.

Die Bewegung des Gasgemisches im Hohlkörper kann durch eine Volumenzunahme des Gasgemisches infolge einer fortschreitenden Verbrennung des Energieträgers hervorgerufen werden. Denkbar ist auch, daß die Bewegung des Gasgemisches beispielsweise durch eine Pumpe gezielt beeinflußt wird. Mit Hilfe der Pumpe kann das Gasgemisch beispielsweise durch den Hohlkörper gesaugt werden.

Allein durch die Bewegung des Gasgemisches im Hohlkörper kann in dem Hohlkörper ein Unterdruck im Vergleich zu einer Umgebung erzeugt werden. Wenn sich in der Umgebung das Ausgangsmaterial befindet, kann es aufgrund dieses Unterdrucks zu einem Ansaugen des Ausgangsmaterials in das Gasgemisch kommen. Dazu wird bevorzugt ein pulverförmiges Ausgangsmaterial des Reduktionsmittels verwendet.

Bevorzugt wird ein mindestens ein Stickstoffatom aufweisendes Reduktionsmittel verwendet. In einer besonderen Ausgestaltung wird Ammoniak als Reduktionsmittel verwendet. Dementsprechend wird ein Ausgangsmaterial von Ammoniak verwendet. Insbesondere wird Harnstoff als Ausgangsmaterial für Ammoniak verwendet. Harnstoff wird bei einer Temperatur, die das Abgas im Auspuffrohr eines Personenkraftwagens aufweist (z.B. zwischen 350° C und 600° C), automatisch in Ammoniak und Kohlendioxid zersetzt.

Andere Ausgangsmaterialien von Ammoniak wie beispielsweise Ammoniumcarbonat, Ammoniumcarbamat, Ammoniumhydrogencarbonat, Ammoniumformiat, Ammoniumoxalat, Ammoniumhydroxid, Cyanursäure, Harnstoff-Formaldehyd, Melamin sowie Mischungen dieser Verbindungen sind ebenfalls denkbar.

Dabei können auch andere Reduktionsmittel als Ammoniak im Gasgemisch gebildet werden. Cyanursäure kann beispielsweise zu Cyansäure umgesetzt werden, das ebenfalls als Reduktionsmittel von Stickoxiden fungieren kann.

Die Aufgabe wird gemäß der Erfindung weiterhin gelöst durch eine Vorrichtung mit den Merkmalen des Patentanspruchs 8. Danach ist vorgesehen, dass die Vorrichtung zum Einbringen eines festen Ausgangsmaterials eines Reduktionsmittels in ein Gasgemisch einen von dem Gasgemisch durchströmbaren Hohlkörper aufweist, der eine Wandung mit mindestens einer Öffnung zum Ansaugen des Ausgangsmaterials, in das Gasgemisch umfasst. Der Hohlkörper hat einen zweiten Bereich mit im Vergleich zu einem ersten Bereich reduzierter Querschnittsfläche zur Erzeugung eines Unterdrucks.

Der Hohlkörper ist beispielsweise ein Abgasrohr. Durch die Öffnung kann das feste Ausgangsmaterial in das Gasgemisch angesaugt werden.

In einer besonderen Ausgestaltung der Erfindung weist die Vorrichtung neben dem Abgasrohr mindestens ein Ansaugrohr und mindestens einen Vorratsbehälter auf. Das Abgasrohr, das Ansaugrohr und der Vorratsbehälter sind derart aneinander angeordnet, daß das Ansaugen des Ausgangsmaterials durch das Ansaugrohr erfolgt.

Beispielsweise ist das Ansaugrohr mit einem Ende direkt an der Stelle der Abgasrohres angebracht, an der sich die Öffnung befindet. Das Abgasrohr und das Ansaugrohr sind formschlüssig miteinander verbunden, wobei die Öffnung durch das Ansaugrohr gebildet ist. Ein anderes Ende des Ansaugrohres steht mit dem Vorratsbehälter in Verbindung. Insbesondere steht das andere Ende des Ansaugrohres mit dem Ausgangsmaterial des Vorratsbehälters in Kontakt. Beispielsweise taucht dieses Ende direkt in das Ausgangsmaterial.

Zur Erzeugung eines Druckunterschieds zwischen dem Abgasrohr und dem Ansaugrohr bzw. Vorratsbehälter verfügt das Abgasrohr zumindest über einen ersten Bereich mit einer ersten Querschnittsfläche und über zumindest einen zweiten Bereich mit einer im Vergleich zur ersten Querschnittsfläche kleineren zweiten Querschnittsfläche, wobei das Abgasrohr im zweiten Bereich die Wandung mit der Öffnung zu einem Ansaugen des Ausgangsmaterials in das Gasgemisch aufweist.

Insbesondere ist bei dem Abgasrohr in Strömungsrichtung des Gasgemisches der zweite Bereich zwischen zwei ersten Bereichen angeordnet. In dieser Form ist das Prinzip eines Venturi-Rohres realisiert. Wenn das Gasgemisch im Abgasrohr in der Strömungsrichtung bewegt wird, entsteht am Ort der Öffnung ein Unterdruck, durch den das Ausgangsmaterial durch das Ansaugrohr in das Abgasrohr gesaugt wird. Dies gelingt, wenn das Ansaugrohr eine Querschnittsfläche aufweist, die im Vergleich zur zweiten Querschnittsfläche des zweiten Bereiches des Abgasrohres kleiner ist.

In einer weiteren Ausgestaltung verfügt die Vorrichtung über mindestens ein Mittel zum Dosieren des Ausgangsmaterials. Dazu verfügt das Abgasrohr beispielsweise über eine Drosselklappe. Aufgabe der Drosselklappe ist es, einen variablen Rohrquerschnitt zur Verfügung zu stellen. In Kombination mit einem Mittel, mit dem ein Druckunterschied zwischen dem Abgasrohr und dem Ansaugrohr bzw. dem Vorratsbehälter eingestellt werden kann, gelingt es, eine bestimmte Menge an Ausgangsmaterial in das Gasgemisch einzubringen. Das Mittel zum Druckeinstellen ist beispielsweise eine Drucköffnung des Vorratsbehälters. Diese Drucköffnung ist beispielsweise in einen Deckel des Vorratsbehälters integriert.

In einer weiteren Ausgestaltung verfügt die Vorrichtung über zumindest ein weiteres Rohr das einen Innenraum des Abgasrohres und einen Innenraum des Ansaugrohres miteinander verbindet. Diese weitere Rohr fungiert als Druckausgleichsrohr zwischen dem Abgasrohr und dem Ansaugrohr. Vorzugsweise ist das weitere Rohr mit einem Ventil zum Druckausgleich ausgestattet.

Zur Festlegung der Menge, die dem Gasstrom zugeführt werden muß, verfügt die Vorrichtung über einen Stickoxidsensor. Der Stickoxidsensor mißt die Menge an Stickoxiden, die nach dem Verlassen des Katalysators zur Umsetzung von Stickoxiden in Stickstoff und Kohlendioxid noch vorhanden sind. Entsprechend einem Signal des Stickoxidsensors wird die Menge an Ausgangsmaterial bestimmt, die in das Gasgemisch eingebracht werden soll.

In einer besonderen Ausgestaltung weist der Vorratsbehälter mindestens ein Trockenmittel auf. Das Trockenmittel führt dazu, daß das Ausgangsmaterial rieselfähig bleibt. Dies ist insbesondere bei hygroskopischen Ausgangsmaterialien wie Harnstoff vorteilhaft.

In einer weiteren Ausgestaltung weist die Vorrichtung mindestens ein Mittel zur Kontrolle einer vorhandenen Menge des Ausgangsmaterials auf. Dieses Mittel ist insbesondere eine Lichtschranke. Die Lichtschranke besteht beispielsweise aus einer Licht emittierenden Photodiode und einem das Licht registrierenden Photodetektor. Wenn nur mehr eine bestimmte Menge an Ausgangsmaterial vorhanden ist, d.h. wenn ein bestimmter Teil des Ausgangsmaterials verbraucht ist, wird ein Signal generiert, das über die vorhandene Menge an Ausgangsmaterial informiert. Ein Informieren kann beispielsweise mit einer Aufforderung zu einem "Nachtanken" des Ausgangsmaterials verbunden sein. Ebenso ist denkbar, daß ein Zündvorgang unterbrochen wird. Mit Hilfe mehreren Mittel zur Kontrolle einer vorhandenen Menge an Ausgangsmaterial kann ein Verbrauch an Ausgangsmaterial genau nachvollzogen werden.

Das "Nachtanken" kann so erfolgen, daß das Ausgangsmaterial in einen leeren Vorratsbehälter eingefüllt wird. Möglich ist es auch, einen leeren Vorratsbehälter gegen einen vollen Vorratsbehälter auszutauschen.

Mit der Erfindung verbindet sich der Vorteil, daß in einem Abgassystem, ein einfaches und kostengünstiges Verfahren zur Stickstoffreduzierung durchgeführt werden kann. Eine Feststoffdosierung kann zudem definiert erfolgen, d.h. eine zur Reduktion von Stickoxiden benötigte Menge an Reduktionsmittel bzw. eine dafür benötigte Menge an Ausgangsmaterial des Reduktionsmittels kann genau eingestellt werden.

Anhand mehrere Ausführungsbeispiele und der dazugehörigen Zeichnungen wird im folgenden ein Verfahren und eine dazu benutzte Vorrichtung zum Einbringen eines festen Ausgangsmaterials eines Reduktionsmittels von Stickoxid in ein Gasgemisch vorgestellt. Die Figuren sind schematisch und stellen keine maßstabsgetreuen Abbildungen dar.

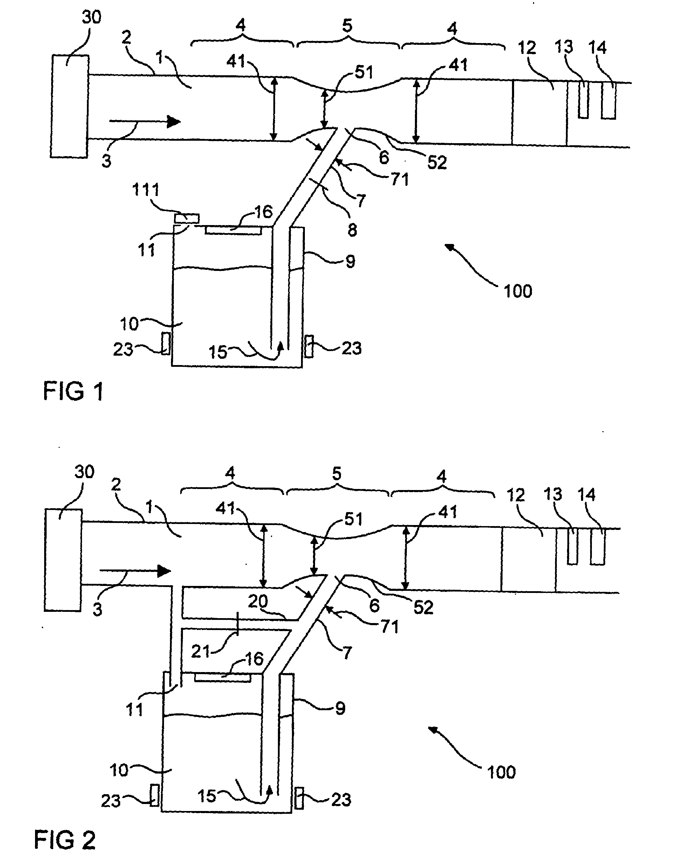

Figur 1 zeigt eine erste Ausführungsform einer Vorrichtung zum Einbringen von festem Harnstoff in ein Abgas.

Figur 2 zeigt eine zweite Ausführungsform einer Vorrichtung zum Einbringen von festem Harnstoff in ein Abgas.

Ausgangspunkt ist ein Gasgemisch 1 in Form eines Abgases eines Dieselmotors. Das Abgas 1 wird durch ein Auspuffrohr 2 in Strömungsrichtung 3 bewegt. Im Abgas 1 sind aufgrund der Verbrennung von Diesel in Gegenwart von Luft Stickoxide enthalten. Diese Stickoxide werden mit Hilfe eines Katalysators 12 und Ammoniak als Reduktionsmittel aus dem Abgas 1 entfernt. Dazu wird pulverförmiger Harnstoff 10 vor dem Katalysator 12 in das Auspuffrohr 2 mit dem Abgas 1 angesaugt.

In einem ersten Ausführungsbeispiel besteht die Vorrichtung 100 zum Einbringen des pulverförmigen Harnstoffs 10 aus dem Auspuffrohr 2. Das Auspuffrohr 2 weist in Strömungsrichtung zwischen zwei ersten Bereichen 4 mit einer ersten Querschnittsfläche 41 einen zweiten Bereich 5 mit einer zweiten Querschnittsfläche 51 auf. Eine Querschnittsfläche 51 des zweiten Bereichs 5 ist kleiner als eine Querschnittsfläche 41 eines ersten Bereichs 4. In einer Wandung 52 des zweiten Bereichs 5 weist das Auspuffrohr 2 eine Öffnung 6 auf. An der Öffnung 6 ist ein erstes Ende eines Ansaugrohres 7 am Auspuffrohr 2 formschlüssig so angebracht, daß ein Innenraum des Ansaugrohres 7 und ein Innenraum des Auspuffrohres 2 miteinander in Kontakt stehen. Das Ansaugrohr 7 ist auf diese Weise an das Auspuffrohr 2 angeschlossen. An der Öffnung 6 ist ein Durchmesser der Öffnung 6 etwa genauso groß wie ein Durchmesser des Ansaugrohres 7.

Das Ansaugrohr 7 verfügt über eine Querschnittsfläche 71, die kleiner ist als die Querschnittsfläche 51 des zweiten Bereichs des Auspuffrohrs 2. Zudem weist das Ansaugrohr 7 ein Mittel zum Dosieren des Ausgangsmaterials in Form einer Drosselklappe 8 auf. Über die Drosselklappe 8 kann die Querschnittsfläche 71 des Ansaugrohres 7 verändert werden.

Das Ansaugrohr 7 taucht mit einem zweiten Ende in pulverförmigen Harnstoff 10 eines Vorratsbehälters 9 ein. Der Vorratsbehälter verfügt über ein Trockenmittel 16 aus Silikagel. Mit Hilfe der Drosselklappe 8 kann ein Druckunterschied zwischen dem Innenraum des Vorratsbehälters 9 bzw. des Ansaugrohres 7 und dem zweiten Bereich 5 des Auspuffrohres 2 eingestellt werden. Dies gelingt durch Variation der Querschnittsfläche 71 des Ansaugrohres 7. Zusätzlich verfügt der Vorratsbehälter 9 über eine Deckel 111. Mit diesem Deckel ist es Möglich, eine Öffnung 11 zum Druckausgleich einzustellen. Zudem stellt der Deckel 111 sicher, daß keine feuchte Luft aus der Umgebung der Vorrichtung 100 angesaugt wird. Dazu wird die Luft, die angesaugt wird, an einem Trockenmittel vorbeigeleitet.

In einem weiteren Ausführungsbeispiel verfügt die Vorrichtung 100 als Mittel zum Dosieren des Ausgangsmaterials 10 ein Druckausgleichsrohr 20 mit einem Ventil 21. Das Druckausgleichsrohr ist an das Abgasrohr 2 und an das Ansaugrohr 7 angeschlossen. Wird das Ventil 21 geschlossen, sinkt aufgrund der Strömung des Abgases 1 der Druck im zweiten Bereichs 5 des Auspuffrohres 2. Es wird Harnstoff 10 in das Abgas 1 angesaugt.

Die verschiedenen Ausführungsbeispiele der Vorrichtung 100 verfügen überdies über ein Mittel 23 zum Kontrollieren einer Menge an vorhandenem Ausgangsmaterial 10. Dieses Mittel ist eine Lichtschranke, bestehend aus einer Licht emittierenden Photodiode und einem Photodetektor. Die Lichtschranke ist am Vorratsbehälter 9 angeordnet. Zwischen Photodiode und Photodetektor befindet sich das Ausgangsmaterial 10. Sobald eine vorhandene Menge an Ausgangsmaterial unter ein bestimmtes Niveau sinkt, wird ein Signal generiert, das dem Betreiber anzeigt, daß eine bestimmte Menge an vorhandenem Ausgangsmaterial unterschritten ist.

Zur Durchführung des Verfahrens zum Einbringen von pulverförmigen Harnstoff 10 in das Abgas 1 ist nach dem Katalysator 12 ein Gassensor 13 für Stickoxide angeordnet.

Folgender Regelungsablauf findet beim Einbringen des Harnstoffs 10 in das Abgas 1 statt: Ausgangspunkt ist ein Start des Dieselmotors 30. Mit dem Start wird ein Messen von Stickoxid im Abgas 1 in Gang gesetzt. Ein Gassensor 13 für Stickoxide, der das Abgas 1 nach einem Katalysator 12 für die Umsetzung von Ammoniak und Stickoxiden zu molekularem Stickstoff und Kohlendioxid beschleunigt, wird ein Gehalt an Stickoxiden im Abgas 1 untersucht. Entsprechend dem Gehalt an Stickoxiden wird für einen bestimmten Druckunterschied zwischen dem Innenraum des Vorratsbehälters 9 bzw. des Ansaugrohres 7 und dem zweiten Bereich 5 des Auspuffrohres 2 gesorgt. Ist der Gehalt an Stickoxiden zu hoch, wird der Druckunterschied erhöht. Durch einen erhöhten Druckunterschied wird mehr Harnstoff durch das Ansaugrohr 7 in das Abgas 1 des Auspuffrohres 2 angesaugt. Es wird mehr Harnstoff zu Ammoniak umgesetzt, was zu einer Verringerung des Gehalts an Stickoxiden im Abgas 1 führt. Verringert sich der Gehalt an Stickoxiden im Abgas 1, so wird der Druckunterschied erniedrigt. Es gelangt weniger Harnstoff in das Abgas 1.

In einem weiteren Ausführungsbeispiels ist ein weiterer Gassensor 14 nach dem Katalysator 12 vorgesehen, der einen Gehalt an Ammoniak im Abgas 1 bestimmt. Ist der bestimmte Gehalt an Ammoniak im Abgas 1 zu hoch, wird der Druckunterschied ebenfalls erniedrigt.

## Patentansprüche

1. Verfahren zum Einbringen mindestens eines festen Ausgangsmaterials (10) mindestens eines Reduktionsmittels eines Stickoxids in ein Gasgemisch (1), das in einem Hohlkörper (2) in einer Strömungsrichtung (3) bewegt wird, **dadurch gekennzeichnet, daß** durch die Bewegung des Gasgemisches (1) im Hohlkörper (2) das Ausgangsmaterial (10) in das Gasgemisch (1) angesaugt wird.

2. Verfahren nach Anspruch 1, wobei ein als Hohlkörper (2) ein Drehkörper verwendet wird.

3. Verfahren nach Anspruch 1 oder 2, wobei ein pulverförmiges Ausgangsmaterial (10) verwendet wird.

4. Verfahren nach einem der Ansprüche 1 bis 3, wobei ein Ausgangsmaterial (10) eines mindestens ein Stickstoffatom aufweisenden Reduktionsmittels verwendet wird.

5. Verfahren nach Anspruch 4, wobei ein Ausgangsmaterial (10) von Ammoniak, das als Reduktionsmittel fungiert, verwendet wird.

6. Verfahren nach Anspruch 4 oder 5, wobei Harnstoff als Ausgangsmaterial (10) verwendet wird.

7. Verfahren nach einem der Ansprüche 1 bis 6, wobei als Gasgemisch (1) ein Abgas einer Verbrennungsmaschine (30) verwendet wird.

8. Vorrichtung zum Einbringen mindestens eines festen Ausgangsmaterials (10) mindestens eines Reduktionsmittels eines Stickoxids in ein Gasgemisch (1) mit einem vom Gasgemisch (1) durchströmbaren Hohlkörper (2) und einem Ansaugrohr (7), wobei der Hohlkörper (2) eine Wandung (52) mit mindestens einer Öffnung (6) zum Ansaugen (15) des Ausgangsmaterials (10) in das Gasgemisch sowie einen zweiten Bereich (5) mit einer im Vergleich zu einem ersten Bereich (4) kleineren zweiten Querschnittsfläche (51) zur Erzeugung eines Unterdrucks aufweist, wobei der Hohlkörper (2) in zweiten Bereich (5) die Wandung (52) mit der Öffnung (6) zu einem Ansaugen des Ausgangsmaterials (10) in das Gasgemisch (1) aufweist.

9. Vorrichtung nach Anspruch 8, wobei der Hohlkörper (2) ein Abgasrohr ist.

10. Vorrichtung nach Anspruch 9, aufweisend
- mindestens einen Vorratsbehälter (9) für das Ausgangsmaterial (10), wobei
- das Abgasrohr (2), das Ansaugrohr (7) und der Vorratsbehälter (9) derart aneinander angeordnet sind, daß das Ansaugen (15) des Ausgangsmaterials (10) durch das Ansaugrohr (7) erfolgt.

11. Vorrichtung nach einem der Ansprüche 8 bis 10, wobei der zweite Bereich (5) zwischen zwei ersten Bereichen (4) angeordnet ist.

12. Vorrichtung nach Anspruch 10 oder 11, wobei das Ansaugrohr (7) eine Querschnittsfläche (71) aufweist, die im Vergleich zur zweiten Querschnittsfläche (51) des zweiten Bereichs (5) des Abgasrohres (2) kleiner ist.

13. Vorrichtung nach Ansprüche 10 oder 13, wobei ein Mittel (8) zu einem Dosieren des Ausgangsmaterials (10) vorhanden ist.

14. Vorrichtung nach einem der Ansprüche 10 bis 13, wobei der Vorratsbehälter (9) mindestens ein Trockenmittel (16) aufweist.

15. Vorrichtung nach einem der Ansprüche 10 bis 14, wobei mindestens ein Mittel (23) zur Kontrolle einer Menge des Ausgangsmaterials (10) im Vorratsbehälter (9) vorhanden ist.

16. Vorrichtung nach Anspruch 15, wobei das Mittel (23) zur Kontrolle der Menge des Ausgangsmaterials (10) eine Lichtschranke aufweist.

## Claims

1. Method for introducing at least one solid precursor (10) of at least one reducing agent of a nitrogen oxide into a gas mixture (1) which is moved in a flow direction (3) in a hollow body (2), **characterised in that** the precursor (10) is sucked into the gas mixture (1) by the motion of the gas mixture (1) in the hollow body (2).

2. Method according to Claim 1, wherein a body of revolution is used as the hollow body (2).

3. Method according to Claim 1 or 2, wherein a precursor (10) in powder form is used.

4. Method according to one of Claims 1 to 3, wherein a precursor (10) of a reducing agent having at least one nitrogen atom is used.

5. Method according to Claim 4, wherein a precursor (10) of ammonia, which functions as the reducing agent, is used.

6. Method according to Claim 4 or 5, wherein urea is used as the precursor (10).

7. Method according to one of Claims 1 to 6, wherein an exhaust gas of a combustion engine (30) is used as the gas mixture (1).

8. Device for introducing at least one solid precursor (10) of at least one reducing agent of a nitrogen oxide into a gas mixture (1), having a hollow body (2) through which the gas mixture (1) can flow and a suction tube (7), the hollow body (2) having a wall (52) with at least one opening (6) for sucking (15) the precursor (10) into the gas mixture and a second region (5) with a smaller second cross-sectional area (51) compared to the first region (4) for generating a negative pressure, the hollow body (2) having the wall (52) with the opening (6) in the second region (5) for suction of the precursor (10) into the gas mixture (1).

9. Device according to Claim 8, wherein the hollow body (2) is an exhaust pipe.

10. Device according to Claim 9, having
- at least one storage container (9) for the precursor (10),
- the exhaust pipe (2), the suction tube (7) and the storage container (9) being arranged relative to one another so that the suction (15) of the precursor (10) takes place through the suction tube (7).

11. Device according to one of Claims 8 to 10, wherein the second region (5) is arranged between two first regions (4).

12. Device according to Claim 10 or 11, wherein the suction tube (7) has a cross-sectional area (71) which is smaller compared to the second cross-sectional area (51) of the second region (5) of the exhaust pipe (2).

13. Device according to Claims 10 or 13, wherein a means (8) is provided for dosing the precursor (10).

14. Device according to one of Claims 10 to 13, wherein the storage container (9) contains at least one drying means (16).

15. Device according to one of Claims 10 to 14, wherein at least one means (23) is provided for monitoring a quantity of the precursor (10) in the storage container (9).

16. Device according to Claim 15, wherein the means (23) for monitoring the quantity of the precursor (10) comprises a photoelectric barrier.

## Revendications

1. Procédé d'introduction d'au moins une matière (10) de départ solide d'au moins un agent réducteur d'un oxyde d'azote dans un mélange (1) gazeux qui est déplacé dans un corps (2) creux dans une direction (3) d'écoulement, **caractérisé en ce que** l'on aspire la matière (10) de départ dans le mélange (1) gazeux par le mouvement du mélange (1) gazeux dans le corps (2) creux.

2. Procédé suivant la revendication 1, dans lequel on utilise comme corps (2) creux un corps tournant.

3. Procédé suivant la revendication 1 ou 2, dans lequel on utilise une matière (10) de départ sous forme de poudre.

4. Procédé suivant l'une des revendications 1 à 3, dans lequel on utilise une matière (10) de départ d'au moins un agent réducteur ayant au moins un atome d'azote.

5. Procédé suivant la revendication 4, dans lequel on utilise une matière (10) de départ pour de l'ammoniac qui sert d'agent réducteur.

6. Procédé suivant la revendication 4 ou 5, dans lequel on utilise de l'urée comme matière (10) de départ.

7. Procédé suivant l'une des revendications 1 à 6, dans lequel on utilise comme mélange (1) gazeux un gaz d'échappement d'un moteur (30) à combustion.

8. Dispositif d'introduction d'au moins une matière (10) de départ solide d'au moins un agent réducteur d'un oxyde d'azote dans un mélange (1) gazeux, comprenant un corps (2) creux dans lequel peut passer le mélange (1) gazeux et un tube (7) d'aspiration, dans lequel le corps (2) creux a, pour la production d'une dépression, une paroi (52) ayant au moins une ouverture (6) d'aspiration (15) de la matière (10) de départ dans le mélange gazeux ainsi qu'une deuxième partie (5) ayant, par rapport à une première partie (4), une deuxième surface de section transversale plus petite, le corps (2) creux ayant dans la deuxième partie (5) la paroi (52) ayant l'ouverture (6) pour une aspiration de la matière (10) de départ dans le mélange (1) gazeux.

9. Dispositif suivant la revendication 8, dans lequel le corps (2) creux est un tuyau pour des gaz d'échappement.

10. Dispositif suivant la revendication 9, comprenant
- au moins un réservoir (9) pour la matière (10) de départ, dans lequel
- le tuyau (2) pour les gaz d'échappement, le tube (7) d'aspiration et le réservoir (9) sont disposés les uns à côté des autres, de façon que l'aspiration (15) de la matière (10) de départ s'effectue par le tube (7) d'aspiration.

11. Dispositif suivant l'une des revendications 8 à 10, dans lequel la deuxième partie (5) est disposée entre deux premières parties (4).

12. Dispositif suivant la revendication 10 ou 11, dans lequel le tube (7) d'aspiration a une surface (71) de section transversale qui, par rapport à la deuxième surface (51) de section transversale de la deuxième partie (5) du tuyau (2) pour les gaz d'échappement, est plus petite.

13. Dispositif suivant la revendication 10 ou 12, dans lequel il est prévu un moyen (8) d'addition de manière dosée de la matière (10) de départ.

14. Dispositif suivant l'une des revendications 10 à 13, dans lequel le réservoir (9) a au moins un agent (16) de dessiccation.

15. Dispositif suivant l'une des revendications 10 à 14, dans lequel il est prévu au moins un moyen (23) de contrôle d'une quantité de la matière (10) de départ dans le réservoir (9).

16. Procédé suivant la revendication 15, dans lequel le moyen (23) de contrôle de la quantité de la matière (10) de départ comprend une cellule photoélectrique.
